# EUROPEAN PATENT SPECIFICATION

(11) **EP 2 276 966 B1**
(45) Date of publication and mention of the grant of the patent: **17.10.2012**
(21) Application number: 09747773.1
(22) Date of filing: 18.05.2009
(51) Int. Cl.: F17C 13/00

(54) **CRYOGENIC CAPABLE HIGH PRESSURE CONTAINERS FOR COMPACT STORAGE OF HYDROGEN ONBOARD VEHICLES**
KRYOGENFÄHIGE HOCHDRUCKBEHÄLTER ZUR KOMPAKTEN LAGERUNG VON WASSERSTOFF AN BORD VON FAHRZEUGEN
RÉCIPIENTS HAUTE PRESSION À CAPACITÉ CRYOGÉNIQUE POUR STOCKAGE COMPACT D'HYDROGÈNE À BORD DE VÉHICULES

(30) Priority: 16.05.2008 US 53754
(43) Date of publication of application: 26.01.2011
(73) Proprietor: Lawrence Livermore National Security, LLC, Livermore, CA 94551-9234 (US)
(72) Inventor: BERRY, Gene, D., Sunnyvale CA 94589 (US); ACEVES, Salvador, M., Livermore CA 94550 (US); WEISBERG, Andrew, H., San Francisco CA 94122 (US); ESPINOSA-LOZA, Francisco, Livermore CA 94551 (US); ROSS, Timothy, O., Patterson CA 95363 (US)
(74) Representative: Richards, John
(86) International application number: PCT/US2009/044398
(87) International publication number: WO 2009/140692

(56) References cited:
- EP-A1- 1 199 510
- EP-A1- 1 279 885
- WO-A1-2007/003607
- WO-A1-2008/013685
- WO-A2-2006/108206
- DE-A1- 10 160 701
- FR-A1- 2 594 747
- US-A1- 2005 224 514

## Description

### III. FIELD OF THE INVENTION

The present invention relates to pressure vessels for fluid storage applications. More particularly, the present invention relates to cryogenic-capable high pressure containers for compact flexible storage of hydrogen onboard vehicles.

### IV. BACKGROUND OF THE INVENTION

Hydrogen as an alternative fuel to petroleum is well known, as well as its potential to reduce or eliminate petroleum dependence and associated tailpipe air pollutants and greenhouse gases. However, the predominant technical barrier limiting widespread use of hydrogen-powered vehicles is insufficient onboard fuel storage capacity for highway vehicles within volume, weight, cost, and refueling time constraints.

Three known technologies for automotive hydrogen storage include: high pressure compressed gas storage (CH₂), storage by low-pressure absorption of hydrogen in porous and/or reactive materials, and cryogenic storage as liquid hydrogen (LH₂). Each has its challenges. For example, one drawback of hydrogen stored as a compressed gas is that it occupies a relatively large volume at ambient temperature. For materials which absorb hydrogen, significant weight, cost, and thermal complexity is typically added to onboard storage systems. And LH₂ storage has the potential for evaporative losses from distribution, transfer and refueling operations, as well as from the venting necessary to relieve pressure buildup during periods of inactivity due to heat transfer from the environment. Because of the high sensitivity of LH₂ storage containers to heat transfer, high performance insulation has been used with typical thicknesses of 3 cm or more. Such evaporative losses are commonly associated with the use of conventional low-pressure cryogenic tanks consisting of a vessel for containing a cryogenic liquid, and a jacket spaced from and surrounding the vessel for thermal insulation.

One alternative to the use of conventional low pressure cryogenic tanks for LH₂ storage has been cryogenic-capable/compatible pressure vessels, such as disclosed for example in U.S. Pat. No. 6,708,502, incorporated by reference herein, for flexibly storing cryogenic liquid fuels or compressed gas fuels at cryogenic or ambient temperatures. The cryogenic-capable pressure vessel in the '502 patent has an inner pressure container enclosing a fuel storage volume, an outer container surrounding the inner pressure container to form an evacuated space therebetween, and a thermal insulator surrounding the inner pressure container in the evacuated space to inhibit heat transfer. Additionally, vacuum loss from fuel permeation is substantially inhibited in the evacuated space by, for example, lining the container liner with a layer of fuel-impermeable material, capturing the permeated fuel in the evacuated space, or purging the permeated fuel from the evacuated space. Cryogenic-capable pressure vessels like the one disclosed in the '502 patent are capable of storing hydrogen with far greater thermal endurance than conventional cryogenic tanks, more compactly than conventional ambient temperature pressure vessels, and with lower weight than hydrogen absorption storage technologies.

Moreover, such cryogenic-capable pressure vessels are capable of being refueled with hydrogen in a broad range of thermodynamic states (e.g. compressed hydrogen at ambient temperature, cryogenic LH₂, etc.) to enable more flexible usage by allowing drivers to tailor refueling choices to best meet their driving patterns and priorities (driving range, perceived safety, refueling cost, location, speed, etc). In other words, the choice of fueling options serves to optimize hydrogen storage to suit various purposes, such as maximizing driving range versus minimizing fueling cost. For example, cryogenic-compatible pressure vessels may be filled as needed with either cryogenic LH₂ which provides a greater driving range but costs more to fill, or compressed hydrogen gas, at cryogenic or ambient temperatures which provides a shorter range but significantly reduces fuel costs, increases access to a greater number of refueling locations, and extends dormancy and thermal endurance for shorter distance and/or infrequent driving trips.

Differences between conventional low-pressure cryogenic storage tanks and high-pressure cryogenically-insulated pressure vessels are discussed in the publications by Applicants entitled, *"*Thermodynamics of Insulated Pressure Vessels for Vehicular Hydrogen Storage," LTCRL-JC-728388, June 1997, and *"*Analytical and Experimental Evaluation of Insulated Pressure Vessels for Cryogenic Hydrogen Storage," International Journal of Hydrogen Energy 25 (2000).
EP 1199510 discloses a unit that consists of at least one high-pressure container (1) with a controlled outlet valve (4) and by-pass pipe (5), in which the gas is held under a pressure of 40 - 250 and preferably 50 - 200 bars and in a temperature range of about 15 - 210 deg K and preferably 20 - 200 deg K. The container is held inside a thermal insulation shell (2) and is fitted with a system (9) for recovering the cold from the expanding gas or a heat exchanger for cooling the container before filling.
Closest prior art WO 2006/108206 discloses a container for cryogenic fuel which has a flat construction and which is surrounded by super insulation, to produce a container which can be adapted automatically and in an economical manner to various vehicle models and/or installation situations and can resist mechanical as well as thermal loads. It is composed of several similar straight and closed profiles (4, 5) which are arranged adjacent to each other in various configurations, said profiles being straight profiles which are arranged in a parallel manner in relation to each other, whereby the at least one external defining wall (14, 15, 16, 17) maintains a functional distance in relation to an external defining wall (18) of an adjacent profile and a common closure is embodied as a common connection chamber of the profile (6, 7) which is closed on the open end thereof (28, 29) on both sides. The reinforcements (24, 25) are, preferably, symmetrical to the sides of the external walls thereof (14, 15, 16, 17) in rectangular profiles.

### V. SUMMARY OF THE INVENTION

One aspect of the present invention includes a cryogenic-capable high pressure container for flexibly storing hydrogen, or other substance, in gas and/or liquid phase, comprising: a high pressure vessel (HPV) enclosing a high pressure-capable storage volume and including an access port for providing controlled access to the high-pressure-capable storage volume; and an ultra-thin thermal insulator having a thickness less than about 5 mm surrounding the HPV.

Another aspect of the present invention includes a cryogenic-capable high pressure container for flexibly storing hydrogen, or other substance, in gas and/or liquid phase, comprising: at least two substantially box-shaped high pressure vessels (HPVs) secured in stacked arrangement with each other to form a substantially box-shaped stack, each HPV enclosing a high pressure-capable storage volume and including an access port for providing controlled access to the high-pressure-capable storage volume; a substantially box-shaped lower pressure vessel (LPV) with the stack nested inside the LPV so that a lower pressure-capable storage volume is formed between the stack and the LPV, said LPV including an access port for providing controlled access to the lower-pressure-capable storage volume; and an ultra-thin thermal insulator having a thickness less than about 5 mm conformably surrounding the LPV.

Another aspect of the present invention includes a cryogenic-capable high pressure container for flexibly storing hydrogen, or other substance, in gas and/or liquid phase, comprising: at least one high pressure vessel (HPV) enclosing a high pressure-capable storage volume and including an access port for providing controlled access to the high-pressure-capablc storage volume; a substantially box-shaped lower pressure vessel (LPV) with the HPV nested inside the LPV so that a lower pressure-capable storage volume is formed between the HPV and the LPV, said LPV including an access port for providing controlled access to the lower-pressure-capable storage volume; and an ultra-thin thermal insulator having a thickness less than about 5 mm conformably surrounding the LPV.

And another aspect of the present invention includes a method of flexibly storing hydrogen, comprising: providing a cryogenic-capable high pressure container having a high pressure vessel (HPV) enclosing a high pressure-capable storage volume and including an access port for providing controlled access to the high-pressure-capable storage volume, and an ullra-thin thermal insulator having a thickness less than about 5 mm surrounding the HPV; and filling the cryogenic-capable high pressure container with liquefied hydrogen having a 25/75 percentage ratio of para-hydrogen to ortho-hydrogen.

Generally, the present invention is directed to a cryogenic-capable high pressure container which in the broadest sense combines the use of cryogenic-capable high pressure vessels (HPVs) and ultra-thin thermal barrier(s). The HPVs are of a type capable of high internal pressures, such as for example greater than about 34.42 MPa (5000 psi). And in contrast to the prior thick insulations (e.g. greater than 3 cm) typically used for cryogenic storage applications, the ultra-thin thermal insulators/ barriers of the present invention generally have a thickness less than about 5 mm, e.g. ∼1-3 mm because of the reduced thermal requirements of the container from the flexible usage. The reduced thickness can thus maximize a given available storage space for the storage of fuel. The "ultra-thin thermal barrier" may be one of two types: either a vacuum space, or an insulating material. In the case of a vacuum space, two vessels (e.g. stainless steel) are typically required one nested inside the other and spaced by a low conductivity support/spacer. In the case of insulation material, multiple layers of plastic may be used, for that is easily adapted to any geometry. In addition to the ultra-thin thermal insulation, the cryogenic capable high pressure container of the present invention may also be substantially "box-shaped" to conform to similarly "box-shaped" or otherwise cuboidal spaces available onboard a vehicle to further maximize fuel capacity beyond that of a cryogenic high pressure vessel of conventional shape (e.g. cylindrical, ellipsoidal, or spherical). Further still, lower pressure vessels (LPVs) (capable of internal pressures less than about 34.47 MPa or (5000 psi) may also be used in conjunction with HPVs to provide additional fuel storage volumes.

Exemplary embodiments of the present invention include: "conformable" cryogenic-capable high pressure containers, 2) cryogenic capable pressure containers using cylindrical HPVS to operate at even higher pressures (e.g. in the 68.94-137.89 MPa (10-20k psi) or higher range), and 3) cryogenic capable HPVs and lower pressure conformable LPVs (both inside an ultra-thin thermal barrier/insulator) partitioning hydrogen storage capacity into higher and lower pressure spaces. All of these exemplary embodiments provide flexibility of refueling with hydrogen in different thermodynamic states (for example pressure, temperature, phase, fraction of parahydrogen, etc.) and in varying quantities, which allows the driver to best meet instantaneous requirements (i.e. refueling cost, location, and time as well as vehicle range, trip length, vessel dormancy, and thermal endurance) as discussed in the Background.

The cryogenic-capable high pressure container of the present invention may be constructed in a manner similar to previous cryogenic-compatible pressure containers such as that discussed in U.S. Pat No. 6,708,502. In this regard, in each of the exemplary embodiments, the high pressure vessel (HPV) component of the cryogenic-capable high pressure container is preferably a composite fiber-wrapped vessel similar to those used to store compressed gases. The HPVs enclose a high-pressure-capable storage volume that can be flexibly refueled, such as for example, with high pressure LH₂. Furthermore, performance of the container may be improved and enhanced by selecting appropriate surface treatments leading to a reduction in outgassing. For example, sorbent material may be used (e.g. carbon aerogel, activated carbon, or metal-organic framework) that is located inside the vessel. The sorbent material may improve the thermal endurance of the vessel due to its thermal capacity, and it may provide enhanced hydrogen storage capability at low pressure due to its high porosity. Performance may also be improved by using fiber formulations that may approach the thermal expansion coefficient of aluminum for reduced thermal stresses. Another embodiment may use plastic liners that include liner configurations that may avoid or eliminate hydrogen permeation (See U.S. Pat. No. 6,708,502). Access ports are also provided to enable controlled access to the high pressure-capable storage volume or the low pressure-capable storage volume. Such access port may include an inlet and an outlet for filling and extracting, respectively, hydrogen to and from the respective storage volumes.

And while hydrogen is a common example of an alternative fuel used for alternative fuel vehicle (AFV) applications, it is appreciated that other fuels may also be utilized which are suitable for compressed gas storage and/or cryogenic liquid storage, such as for example compressed natural gas (CNG). In the present discussion, hydrogen is used as an exemplary fuel for generally illustrating operation of the present invention. Additionally, while the advantages of a cryogenic-capable pressure vessel are readily apparent for vehicular storage applications, it is not limited only to such. The present invention may be generally used for any application requiring flexibility in the types of fluids stored.

### VI. BRIEF DESCRIPTION OF THE DRAWINGS

The accompanying drawings, which are incorporated into and form a part of the disclosure, are as follows:

Figure 1 shows one exemplary embodiment of a "conformable" container having multiple high pressure vessels that are each substantially box-shaped and shown with the ultra-thin thermal insulation removed.

Figure 2 is a cross-sectional view of the exemplary embodiment of Figure 1, but now shown with the ultra-thin thermal insulation in place.

Figure 3 is a partially broken isometric view of another exemplary example of a conformable high pressure vessel of the present invention using a macrolattice structure.

Figure 4 shows another vessel that is a cryogenic capable ultra high pressure vessel with ultra-thin insulation and vacuum space. In particular, the ultra high pressure vessel is shown having a cylindrical shape and configuration.

Figure 5 shows another exemplary embodiment of the present invention having a cryogenic capable high pressure vessel nested inside a conformable lower pressure vessel with a common external thermal barrier of ultra-thin vacuum insulation.

Figure 6 shows another exemplary embodiment of the present invention similar to Figure 5 but with two HPVs inside the LPV, and struts of a macrolattice for structurally enhancing the LPV.

### VII. DETAILED DESCRIPTION

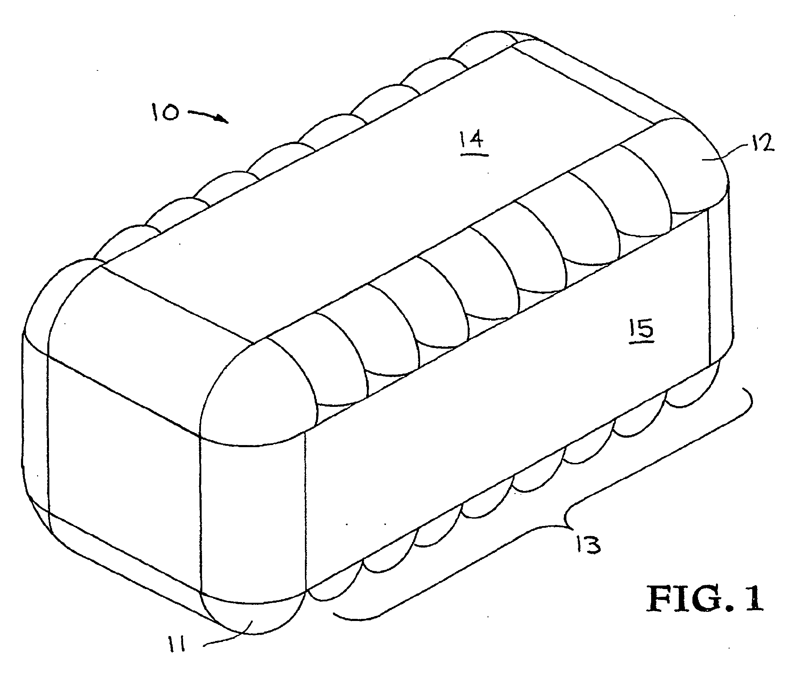

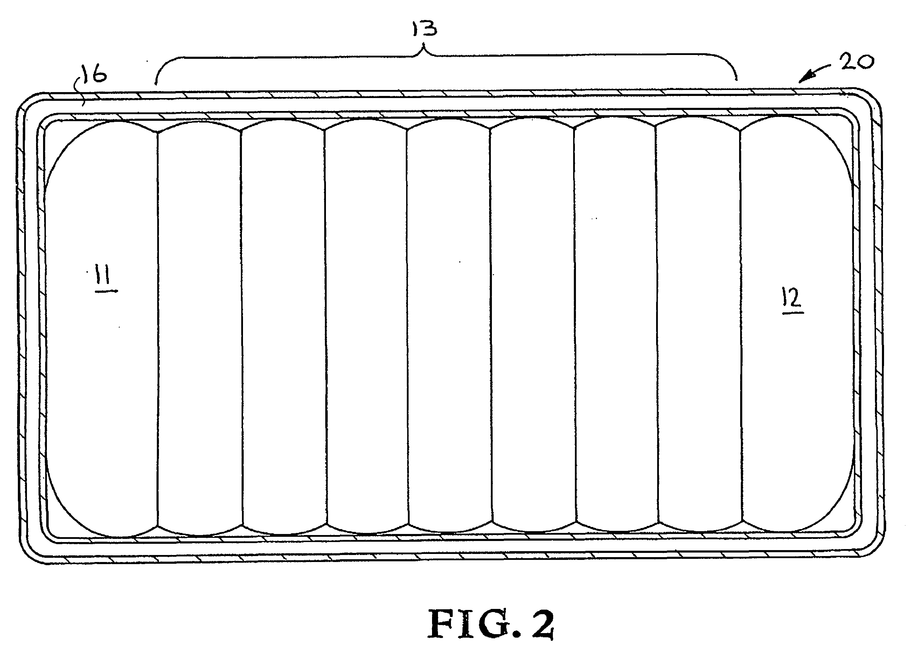

Turning now to the drawings, Figures 1 and 2 show a first exemplary embodiment of a "conformable" cryogenic-capable high pressure container generally indicated at reference character 10, that is configured for high pressure servile. It is appreciated that the term "conformable" used herein and in the claims generally means a shape that substantially takes on the shape of another, and in particular to a vessel having a shape that substantially takes on the shape of a space in which it is to be mounted, positioned, or stored onboard a vehicle.

Because the vessel mounting space in a vehicle (e.g. trunk) is typically a boxy, cuboid space formed by substantially planar surfaces and edges, the conformable embodiment of the present invention is intended to better fill such available boxy spaces (not normally available to a conventional (e.g. cylindrical) pressure vessel), and thereby achieve higher storage capacity. As such, the HPVs individually and as a combined stack shown in Figures 1 and 2 are characterized as being "conformable" because they are substantially box-shaped, and not cylindrical or spherical. As such, "substantially box-shaped" is defined and used herein as having a shape that is substantially like a box. In other words, it generally has a shape similar to a cuboid or right rectangular prism, although not limited strictly to such. It is appreciated that while the conformability of the present invention mainly suggests a regular boxy shape to fill a regular boxy space, irregular boxy shapes may also used to fill irregular boxy spaces as well.

The container 10 is particularly shown in Figures 1 and 2 having nine high pressure vessels (HPVs), 11-13 which are secured together in a stack arrangement, and surrounded by an ultra-thin thermal insulation (16-18 in Figure 2). It is notable that at least two HPVs are required for stacking. In particular, the nine HPVs include two end HPVs 11, 12, and seven intermediate HPVs 13 therebetween, all of which are substantially box-, pillow-, rectancular-prism-, or otherwise cuboid-shaped (hereinafter "substantially box-shaped") so as to have six sides, including two opposing broad-faced surfaces joined by four connecting side surfaces. Adjacent HPVs are stacked together along at least one of their face surfaces.

As can be seen in Figures 1 and 2, the intermediate HPVs have both opposing face surfaces which are flat due to the stacking pressure exerted by longitudinally securing the HPVs together. In contrast, the end HPVs 11 and 12 have one flat face surface and another opposite face surface with a convex, bulbous shape. All the HPVs are bound or otherwise secured together, such as with straps 14 and 15, so that the convex face surfaces of the end HPVs are at opposite ends of the stack. Alternatively, the stack may be wrapped with carbon fiber to secure the HPVs together so as to press them together to reduce stresses in the flat faces. These HPVs are preferably made of composite material (e.g. carbon fiber and epoxy resin), with a rigid wall. It is notable that the planar intersections between the six surface segments occur at corners and edges which are preferably rounded and not angular, so as to reduce stress at the joint due to internal pressures. In this geometry, pressure exerts equal and opposite forces on the flat surfaces (as long as segments are kept at equal pressure). This has the important consequence of eliminating/canceling pressure forces (and bending stresses) on the flat surfaces. In addition to the intermediate HPVS, this embodiment requires the manufacture of end segments that have a flat end and an elliptical end to guarantee pressure elimination in all the flat surfaces. These HPVs may be fiber wound on a plastic liner in the standard procedure used for making composite pressure vessels, except that the fiber paths are different (more complex). These HPVs may also include a metallic liner (not shown).

The vacuum insulation in Figure 2 is shown comprising an inner shell 18 and an outer shell 17 to form a vacuum space 16 therebetween. Both the inner shell and the outer shell surround the stack of HPVs, and have substantially box-shaped configurations themselves. In one embodiment the inner shell 18 may be a lower pressure vessel (LPV) with its own access port (not shown) for enabling controlled access to the interstitial space, i.e. a lower pressure-capable storage volume between the stack and the LPV.

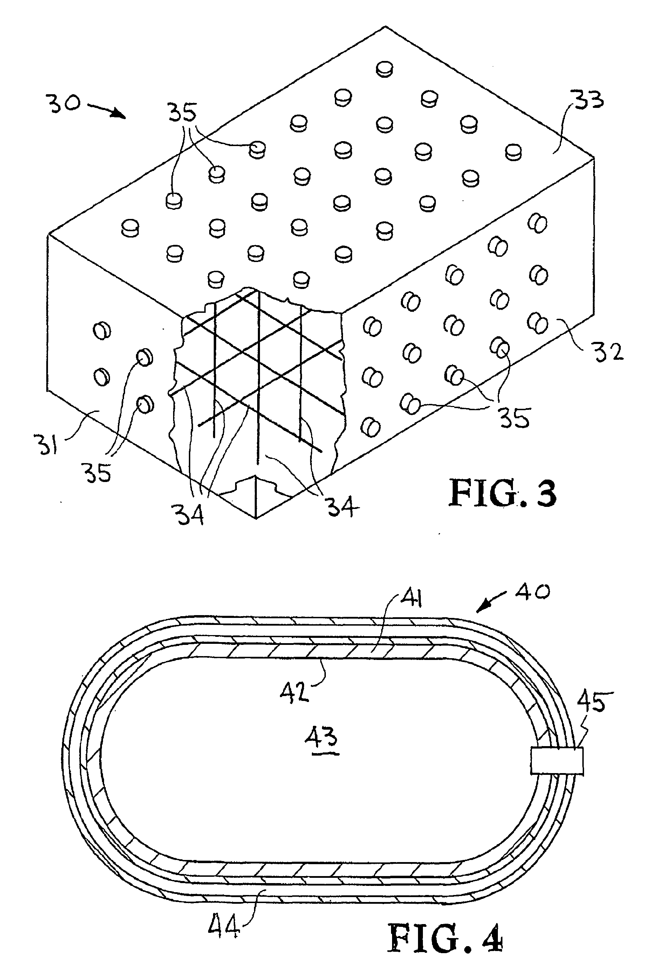

Figure 3 shows another exemplary "conformable" high pressure vessel HPV having a substantially box-shaped configuration, and generally indicated at 30. In particular, the HPV 30 has an internal macrolattice structure which enables the HPV to maintain its shape under high internal pressures by reducing the bending stresses on the outer skin/walls of the vessel. As shown in Figure 3, only three sides 31-33 are shown in isometric view, with an intersecting corner thereof partially broken to reveal the macrolattice structure inside the vessel. The macrolattice structure is shown comprising struts 34 made of a rigid material, such as steel or composite, secured to the walls of the vessel at connection points 35. The struts 34 works under tension for optimum structural efficiency. Preferably, the geometrical pattern of the struts are obtained from crystallography tables, by determining which of all the available lattices yields optimum performance. The selected lattice has high volumetric efficiency (over 80% without including the outer skin) and manufacturability (only two struts cross at any given point).

Figure 4 shows another example of a cryogenic capable high pressure container, generally indicated at 40, and having a substantially cylindrical shape for its HPV. In particular, this vessel 40 is designed to maximize (re)fueling capacity both when refueled with ambient temperature high pressure hydrogen and when refueled with high pressure hydrogen at lower temperatures. Its maximum operating pressure is several times higher than the substantially box-shaped HPVs of Figures 1 and 2, to deliver the same capacity in the same mounting space. Its higher pressure capability requires more structure per unit of hydrogen capacity. This same higher pressure capability enables lower thermal performance requirements, especially given driver choice(s) of refueling with hydrogen of different thermodynamic states. Thermal endurance is further enhanced as fuel is extracted by self-cooling of the remaining hydrogen in the vessel and this effect is particularly strong at higher pressures, temperatures, and hydrogen densities. In Figure 4, an insulation shell is spaced from the high pressure vessel to form an evacuated space 44 therebetween, i.e. the vacuum insulation.

The high pressure vessel 42 in Figure 4 is preferably of a similar type as that described in U.S. Pat. No. 6,708,502, and in particular having a construction similar to the inner pressure container 103 thereof, e.g. a lightweight composite material having a fiber reinforced resin matrix construction that surrounds a high pressure-capable storage volume 43. And an ultra-thin thermal insulator is shown surrounding the HPV 42. In particular, the insulator is shown as an outer shell conformably surrounding the HPV 42 with a thin vacuum space 44 separating the outer shell from the HPV. As shown, the HPV directly sees the vacuum space, and an access port 45 is provided to control access to the high pressure-capable storage volume. An optional inner liner 42 is also shown.

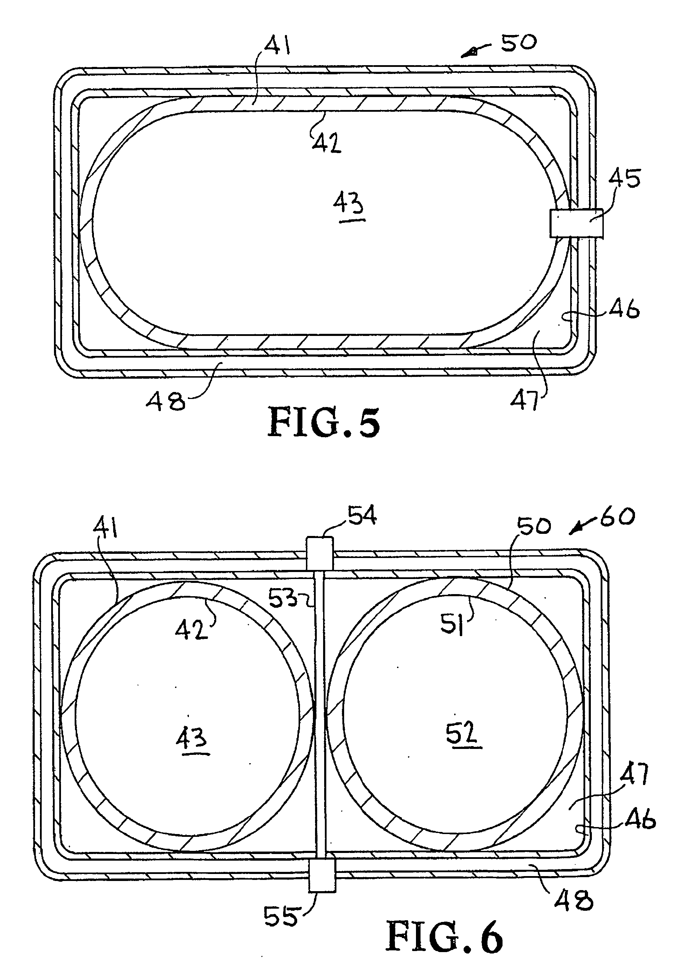

Figure 5 shows another exemplary embodiment of the present invention, indicated at 50, which combines cryogenic capable HPV(s) with a conformable lower pressure vessel (LPV) which stores hydrogen at a lower pressure than the HPV. In particular, a single cylinder-shaped HPV 41 is shown enclosing a high pressure-capable storage volume and nested inside a lower pressure vessel (LPV) 46 such that a lower pressure-capable storage volume 47 is formed therebetween in the interstitial space. The LPV is shown having a substantially box-shaped configuration. The HPV is shown having an access port 45 for enabling controlled access to the high pressure-capable storage volume. The LPV also has an access port (not shown) for enabling controlled access to the lower pressure-capable storage volume. The two higher and lower pressure-capable storage volumes are in thermal contact. Both volumes are inside a common external ultra-thin thermal barrier 48 (vacuum space created by an outer shell 49), reducing heat transfer to either volume from the environment. This embodiment partitions the stored hydrogen into separate quantities, in potentially different thermodynamic states, and with different thermal endurance. This container achieves a very high combined storage capacity by utilizing the additional volume formed by the LPV. The LPV requires less structure (due to its lower pressure) thereby enabling the use of lower cost and/or strength containers. The hydrogen capacity remaining in the HPV still enables extended thermal endurance and significant self-cooling, while retaining moderate hydrogen storage capacity when refueled with ambient temperature hydrogen. A greater range of storage system aspect ratios can be achieved by using multiple cryogenic capable HPVs with a conformable LPV volume at lower pressure. As shown in Figure 5, the LPV and the ultra-thin thermal barrier is also substantially box-shaped so as to substantially conform to and maximize for storage a substantially box-shaped mounting space for the container.

In Figure 6 three pressure vessels are shown which comprise the container 60 generally. Two HPVs are shown at 42 and 51, each cylindrical in shape and enclosing respective high pressure-capable storage volumes 43 and 52. Both HPVS are located inside the LPV 46 so that a lower pressure-capable storage volume 47 is formed therebetween The idea is to store hydrogen not only inside the HPVs but also in the interstices between the HPVs and the LPV, i.e. the low pressure-capable storage volume, to better occupy a square space. Considering that the HPV are rated for very high pressure and the LPV is rated for lower pressure, each vessel would have its own separate access ports to fill and extract from the respective storage volumes. The embodiment is composed of multiple cryogenic capable high pressure vessels and a lower pressure conformable container with a common external thermal barrier of ultra-thin vacuum insulation. This arrangement achieves greater aspect ratio flexibility relative to a storage system with only a single high pressure vessel. The HPVs can store cryogenic hydrogen at high pressure and the outer LPV can store (additional) liquid hydrogen at lower pressure (e.g. 101.32 to 506.62 kPa, or 1-5 atm). Also shown are struts 53 secured at ends 54 to the walls of the LPV in a macrolattice arrangement to enhance the structure of the LPV for internal high pressures. All components of the container 60, including the struts 53 and connections 54, 54, are shown contained inside the ultra-thin thermal insulator that is formed by the outer shell 49.

Furthermore, these containers can be designed to take advantage of the self-cooling available from driving that can be stored in the ortho-para nuclear spin states of hydrogen. This thermal energy storage mechanism could occur spontaneously or be intentionally accelerated. All classes of these hydrogen storage systems benefit from the possibility of refueling with lower cost (lower than equilibrium fraction of parahydrogen) cryogenic hydrogen. For example, if a vehicle is initially fueled with a quantity of liquid hydrogen in which 25% of the molecules have the nuclear spin state known as "para" and 75% of which have the nuclear spin state known as "ortho" (this mixture of hydrogen molecules is often referred to as 'normal' hydrogen), the orthohydrogen molecules tend to change nuclear spin state and convert to parahydrogen molecules that are more stable at liquid hydrogen temperatures. This process releases heat, increasing the pressure of the stored hydrogen. This is beneficial to vehicle operation, providing the pressure potentially needed for vehicle operation, reducing or eliminating the need for a heat exchanger. Subsequently, as the hydrogen approaches temperatures between 40 and 100 K, an increasing fraction of parahydrogen molecules will tend to convert to orthohydrogen molecules, thereby absorbing heat and significantly enhancing thermal endurance. Another possibility is deliberate manipulation of the nuclear spin states of hydrogen molecules during refueling to store even greater amounts of hydrogen in the container. For example, if the container is filled with liquid parahydrogen and then topped off with high pressure cryogenic parahydrogen, the contents warm up. Conversion to the equilibrium concentration of parahydrogen at this warmer temperature will cool and further densify the fuel. Filling the high pressure vessel and/or the low pressure space are fueled with a quantity of liquid hydrogen in which 25% of the molecules have the nuclear spin state known as "para" and 75% of which have the nuclear spin state known as "ortho" (this mixture of hydrogen molecules is often referred to as 'normal' hydrogen) has the following advantages. Hydrogen with this combination of spin states can be liquefied with considerably less energy (∼30% less) than the equilibrium composition of liquid hydrogen (100% para). Ortho-hydrogen at liquid hydrogen temperature will convert over a few days to para-hydrogen, releasing heat and enhancing evaporation. This makes it impossible to use normal liquid hydrogen in most applications. The high pressure capability of our cryogenic pressure vessels described here enable direct utilization of normal liquid hydrogen in the vehicle without ortho-para conversion, thereby reducing by 30°% the liquefaction energy.)

While particular operational sequences, materials, temperatures, parameters, and particular embodiments have been described and or illustrated, such are not intended to be limiting. Modifications and changes may become apparent to those skilled in the art, and it is intended that the invention be limited only by the scope of the appended claims.

## Claims

1. A cryogenic-capable high pressure container for storing hydrogen, or other substance, in gas and/or liquid phase, comprising:
at least one high pressure vessel (11, 12) enclosing a high pressure-capable storage volume and including an access port for providing controlled access to the high-pressure-capable storage volume;
the container further comprising a substantially box-shaped lower pressure vessel (17) with the at least one high pressure vessel (11, 12) nested inside the low pressure vessel so that a lower pressure-capable storage volume is formed between the at least one high pressure vessel (11, 12) and the low pressure vessel (17) and the low pressure vessel is positioned between the at least one high pressure vessel and the ultra-thin thermal insulator (16), said low pressure vessel including an access port for providing controlled access to the lower-pressure-capable storage volume;
wherein the high pressure vessel (11, 12) and lower pressure vessel (17) are provided for partitioning the stored hydrogen, or other substance, into separate quantities, **characterized in that**
an ultra-thin thermal insulator (16) having a thickness less than 5 mm surrounds the high pressure vessel;.

2. The cryogenic-capable high pressure container of claim 1, wherein said at least one high pressure vessel (11, 12) is substantially box-shaped; the container further comprising at least one additional substantially box-shaped high pressure vessel (12, 11) secured in stacked arrangement with the at least one high pressure vessel (11, 12) to form a substantially box-shaped stack, with the substantially box-shaped lower pressure vessel (17) surrounding the stack.

3. The cryogenic-capable high pressure container of claim 1, wherein the ultra-thin thermal insulator conformably surrounds the low pressure vessel.

4. The cryogenic-capable high pressure container of claim 1, wherein at least one of the high pressure-capable storage volume and the lower pressure-capable storage volume is at least partially filled with a high porosity sorbent material that stores hydrogen on its surface.

5. The cryogenic-capable high pressure container of claim 1, further comprising a plurality of struts extending through the lower pressure-capable storage volume and connecting opposing walls of the low pressure vessel.

6. The cryogenic-capable high pressure container of claim 1, further comprising a plurality of struts extending through the high pressure-capable storage volume and connecting opposing walls of the high pressure vessel.

7. The cryogenic-capable high pressure container according to any of claim 1 to 6, wherein the ultra-thin thermal insulator has a thickness of about 1 to 3 mm.

8. A method of storing hydrogen, comprising:
providing a cryogenic-capable high pressure container according to any of claim 1 to 7; and
filling the cryogenic-capable high pressure container with liquefied hydrogen having a 25/75 percentage ratio of para-hydrogen to ortho-hydrogen.

## Patentansprüche

1. Kryogenfähiger Hochdruckbehälter zur Aufbewahrung von Wasserstoff oder einer anderen Substanz in einer Gas- und/oder flüssigen Phase, wobei der Behälter folgendes umfasst:
mindestens ein Hochdruckgefäß (11, 12), das ein hochdruckfähiges Aufbewahrungsvolumen einschließt und einen Zugangsanschluss zur Bereitstellung eines geregelten Zugangs zu dem hochdruckfähigen Aufbewahrungsvolumen aufweist;
wobei der Behälter ferner ein im Wesentlichen kastenförmiges Niederdruckgefäß (17) umfasst, wobei mindestens ein Hochdruckgefäß (11, 12) in dem Niederdruckgefäß verschachtelt ist, so dass ein niederdruckfähiges Aufbewahrungsvolumen gebildet wird zwischen dem mindestens einen Hochdruckgefäß (11, 12) und dem Niederdruckgefäß (17), und wobei das Niederdruckgefäß positioniert ist zwischen dem mindestens einen Hochdruckgefäß und dem ultradünnen Wärmeisolator (16), wobei das genannte Niederdruckgefäß einen Zugangsanschluss zur Bereitstellung eines geregelten Zugangs zu dem niederdruckfähigen Aufbewahrungsvolumen aufweist;
wobei das Hochdruckgefäß (11, 12) und das Niederdruckgefäß (17) vorgesehen sind, um den aufbewahrten Wasserstoff oder eine andere Substanz in getrennte Mengen aufzuteilen; **dadurch gekennzeichnet dass** ein ultradünner Wärmeisolator (16) mit einer Dicke von weniger als 5 mm das Hochdruckgefäß umgibt.

2. Kryogenfähiger Hochdruckbehälter nach Anspruch 1, wobei das genannte mindestens eine Hochdruckgefäß (11, 12) im Wesentlichen kastenförmig ist; wobei der Behälter ferner mindestens ein zusätzliches, im Wesentlichen kastenförmiges Hochdruckgefäß (12, 11) umfasst, das in einer Stapelanordnung mit dem mindestens einen Hochdruckgefäß (11, 12) gesichert ist, so dass ein im Wesentlichen kastenförmiger Stapel gebildet wird, wobei das im Wesentlichen kastenförmige Niederdruckgefäß (17) den Stapel umgibt.

3. Kryogenfähiger Hochdruckbehälter nach Anspruch 1, wobei der ultradünne Wärmeisolator zusammenpassend das Niederdruckgefäß umgibt.

4. Kryogenfähiger Hochdruckbehälter nach Anspruch 1, wobei zumindest das hochdruckfähige Aufbewahrungsvolumen oder das niederdruckfähig Aufbewahrungsvolumen zumindest teilweise gefüllt ist mit einem Sorptionsmaterial mit hoher Porosität, das auf dessen Oberfläche Wasserstoff speichert.

5. Kryogenfähiger Hochdruckbehälter nach Anspruch 1, wobei dieser ferner eine Mehrzahl von Streben umfasst, die sich durch das niederdruckfähige Aufbewahrungsvolumen erstrecken und gegenüberliegende Wände des Niederdruckgefäßes verbinden.

6. Kryogenfähiger Hochdruckbehälter nach Anspruch 1, wobei dieser ferner eine Mehrzahl von Streben umfasst, die sich durch das hochdruckfähige Aufbewahrungsvolumen erstrecken und gegenüberliegende Wände des Hochdruckgefäßes verbinden.

7. Kryogenfähiger Hochdruckbehälter nach einem der Ansprüche 1 bis 6, wobei der ultradünne Wärmeisolator eine Dicke von etwa 1 bis 3 mm aufweist.

8. Verfahren zur Aufbewahrung von Wasserstoff, wobei das Verfahren folgendes umfasst:
das Bereitstellen eines kryogenfähigen Hochdruckbehälters nach einem der Ansprüche 1 bis 7; und
das Füllen des kryogenfähigen Hochdruckbehälters mit flüssig gemachtem Wasserstoff mit einem Verhältnis zwischen Para-Wasserstoff und Ortho-Wasserstoff von 25 Prozent zu 75 Prozent.

## Revendications

1. Récipient haute pression à capacité cryogénique pour stocker de l'hydrogène, ou une autre substance, en phase gazeuse et/ou liquide, comprenant :
au moins un récipient à haute pression (11, 12) enfermant un volume de stockage à capacité de haute pression et comprenant un orifice d'accès pour fournir un accès contrôlé au volume de stockage à capacité de haute pression ;
le récipient comprenant en outre un récipient à plus basse pression sensiblement en forme de boîte (17), l'au moins un récipient à haute pression (11, 12) étant placé à l'intérieur du récipient à basse pression de sorte qu'un volume de stockage à capacité de plus basse pression est formé entre l'au moins un récipient à haute pression (11, 12) et le récipient à basse pression (17) et le récipient à basse pression est positionné entre l'au moins un récipient à haute pression et l'isolant thermique ultra-mince (16), ledit récipient à basse pression comprenant un orifice d'accès pour fournir un accès contrôlé au volume de stockage à capacité de plus basse pression ;
dans lequel le récipient à haute pression (11, 12) et le récipient à plus basse pression (17) sont prévus pour séparer l'hydrogène stocké, ou une autre substance, en des quantités distinctes, **caractérisé en ce qu'**un isolant thermique ultra-mince (16) ayant une épaisseur inférieure à 5 mm entoure le récipient à haute pression.

2. Récipient haute pression à capacité cryogénique selon la revendication 1, dans lequel ledit au moins un récipient à haute pression (11, 12) est sensiblement en forme de boîte, le récipient comprenant en outre au moins un récipient à haute pression sensiblement en forme de boîte supplémentaire (12, 11) fixé dans un agencement empilé avec l'au moins un récipient à haute pression (11, 12) pour former une pile sensiblement en forme de boîte, le récipient à plus basse pression sensiblement en forme de boîte (17) entourant la pile.

3. Récipient haute pression à capacité cryogénique selon la revendication 1, dans lequel l'isolant thermique ultra-mince entoure le récipient à basse pression en prenant sa forme.

4. Récipient haute pression à capacité cryogénique selon la revendication 1, dans lequel au moins l'un du volume de stockage à capacité de haute pression et du volume de stockage à capacité de basse pression est au moins partiellement rempli d'un matériau absorbant à porosité élevée qui stocke l'hydrogène sur sa surface.

5. Récipient haute pression à capacité cryogénique selon la revendication 1, comprenant en outre une pluralité d'entretoises s'étendant à travers le volume de stockage à capacité de plus basse pression et reliant des parois opposées du récipient à basse pression.

6. Récipient haute pression à capacité cryogénique selon la revendication 1, comprenant en outre une pluralité d'entretoises s'étendant à travers le volume de stockage à capacité de haute pression et reliant des parois opposées du récipient à haute pression.

7. Récipient haute pression à capacité cryogénique selon l'une quelconque des revendications 1 à 6, dans lequel l'isolant thermique ultra-mince a une épaisseur d'environ 1 à 3 mm.

8. Procédé de stockage d'hydrogène, comprenant les étapes consistant à :
fournir un récipient cryogénique à capacité de haute pression selon l'une quelconque des revendications 1 à 7 ; et
remplir le récipient cryogénique à capacité de haute pression avec de l'hydrogène liquéfié ayant un rapport en pourcentage de 25/75 de para-hydrogène et d'ortho-hydrogène.
